# EUROPÄISCHE PATENTSCHRIFT

(11) **EP 2 238 411 B1**
(45) Veröffentlichungstag und Bekanntmachung des Hinweises auf die Patenterteilung: **10.06.2020**
(21) Anmeldenummer: 08786205.8
(22) Anmeldetag: 17.07.2008
(51) Int. Cl.: G01D 5/20

(54) **ANORDNUNG EINES SPULENPAARES IN EINEM ÖRTLICHEN MESSBEREICH**
ARRANGEMENT OF A COIL PAIR IN A LOCAL MEASUREMENT AREA
CONFIGURATION D'UNE PAIRE DE BOBINES D'INDUCTION DANS UN DOMAINE DE MESURE

(30) Priorität: 19.07.2007 DE 102007033751
(43) Veröffentlichungstag der Anmeldung: 13.10.2010
(73) Patentinhaber: ZF Friedrichshafen AG, 88046 Friedrichshafen (DE)
(72) Erfinder: SCHMITT, Andreas, 91278 Pottenstein (DE)
(74) Vertreter: ZF Friedrichshafen AG
(86) Internationale Anmeldenummer: PCT/EP2008/059366
(87) Internationale Veröffentlichungsnummer: WO 2009/010552

(56) Entgegenhaltungen:
- EP-A- 1 158 266
- EP-A- 1 508 781

## Beschreibung

Die Erfindung bezieht sich auf die Anordnung zweier Spulen (eines Spulenpaars) in einem örtlichen Messbereich. Bei dem örtlichen Messbereich kann es sich um einen Positionsbereich handeln, wenn eine lineare Position s gemessen wird, oder es kann sich um einen Winkelbereich handeln, wenn ein Winkel α gemessen wird. Für die Spulenanordnung ist es auch wesentlich, dass ein nominaler Abstand x von einem Bedämpfungselement vorgegeben ist. Bei dem Bedämpfungselement handelt es sich um ein Wirbelstrom-Bedämpfungselement, welches - abhängig von der zu messenden Position s oder von dem zu messenden Winkel α - die Spulen bis zu einem gewissen Grad überdeckt. Für die Induktivität kommt es auf die überdeckte Spulenfläche an.

In der Auswertungsschaltung sind die Spulen häufig mit einem Kondensator zu einem Oszillatorelement verschaltet, dessen Induktivität und Kapazität eine Resonanzfrequenz f bestimmen. Bei einer Ortsveränderung des Bedämpfungselements ändert sich die Überdeckung der Flachspulen. Durch den Wirbelstromeffekt ändert sich die Induktivität der Spulen und damit verändert sich die Resonanzfrequenz f. Letztlich hat die Messanordnung eine Kennlinie f(s), also beispielsweise der Oszillatorfrequenz f als Funktion der Position s.

Es ist bekannt, die Flachspulen als Rechteckspulen auszuführen und dadurch die Kennlinie in einem relativ weiten Messbereich M linear zu erhalten. Aus der älteren Anmeldung EP 06015898.7, veröffentlicht als EP 1 887 322 A1, und dem dort gewürdigten Stand der Technik ist es in diesem Zusammenhang auch bekannt, durch eine trapezartige Aufweitung der Rechteckspule an ihren Enden den linear nutzbaren Messbereich M zu erweitern, sodass er praktisch so lang wie die Spulenlänge L wird. Von diesen Voraussetzungen geht die vorliegende Erfindung aus, d.h. sie baut auf dieser induktiven Sensorik auf im Unterschied zu resistiven, kapazitiven, magnetoresistiven und anderen Messprinzipien.

Allerdings wurden solche Rechteckspulen bisher nur so genutzt, dass sie in Messrichtung hintereinander angeordnet waren. Zwei dreiecksförmig ineinander greifende, überlappende Flachspulen, die auch bekannt sind, sind mit der vorliegenden Erfindung nicht vergleichbar, weil sie keine linearen Kennlinien f(s) besitzen.

Hiervon abweichend sind aus der WO 97/39312 A1, Fig. 7, und aus der US 2002/0186007 A1, Figuren 2 und 13, Spulenpaare bekannt, die sich als Rechteckspulen innerhalb des Messbereichs überlappen. Allerdings werden dort entweder nur Induktivitäten anstatt Oszillatorfrequenzen gemessen, oder (sofern in der WO 97/39312 A1 Oszillatorfrequenzen gemessen werden) wird nicht auf ein lineares Kennlinienfeld im Messbereich geachtet.

In EP 1 508 781 A1 umfasst der Messbereich nicht nur den Überlappungsbereich sondern auch den Überhang zweier Spulen. In EP 1 158 266 A1 ist ein Wegmesssystem offenbart, bei dem die Spulen sich überlappen.

Es ist auch bekannt, dass die oberbegrifflich vorausgesetzte Spulenanordnung störenden Eingriffen in den Messablauf ausgesetzt sein kann. Besonders empfindlich reagiert die lineare Kennlinie auf Änderungen des Abstands zwischen der Messebene der Flachspulen und dem Wirbelstrombedämpfungselement. Auch Verkippungen in Messrichtung, d. h. unterschiedliche Abstände relativ zur einen Spule und zur anderen Spule führen zu Fehlmessungen. Schließlich ist das Messergebnis temperaturabhängig.

Aufgabe der Erfindung ist es deshalb, eine störungsunempfindliche Spulenanordnung anzugeben.

Diese Aufgabe wird mit einer Anordnung eines Spulenpaars in einem örtlichen Messbereich mit einem Messoszillator und einem Wirbelstrom-Bedämpfungselement in einem nominalen Abstand von dem Spulenpaar gelöst,
a. wobei die Spulen sich als Rechteckspulen innerhalb des Messbereichs in Messrichtung überlappen, wobei der Überlappungsbereich den Messbereich bildet
b. wobei die Spulen einen Überhang der Spulenlänge an jeweils einem Ende des Messbereichs aufweisen
c. wobei das Wirbelstrom-Bedämpfungselement mit zwei quer zur Messrichtung definierten Kanten relativ zum Spulenpaar in Messrichtung verschiebbar ist, und das Wirbelstrom-Bedämpfungselement zumindest teilweise beide Spulen des Spulenpaars überdeckt, wobei stets nur eine Kante des Wirbelstrom-Bedämpfungselements an der partiellen Überdeckung beteiligt ist
d. und die Spulen (A, B) mit einem Messoszillator jeweils eine lineare Kennlinie der Oszillatorfrequenz (f) als Funktion des Orts (s, Φ) des Wirbelstrom-Bedämpfungselements aufweisen, und
e. diese linearen Kennlinien jeweils einen von Störungen, d. h. von Streuungen des nominalen Abstands, von Verkippungen des Wirbelstrom-Bedämpfungselements in Messrichtung und von Temperaturänderungen, weitgehend unabhängigen, virtuellen, d. h. außerhalb des Messbereichs liegenden Drehpunkt im Kennlinienfeld (A0, B0) aufweisen.

Die Eigenschaften von speziellen Ausführungsbeispielen sind in den Unteransprüchen angegeben.

Die Erfindung ist besonders vorteilhaft anwendbar unter schwierigen Messbedingungen. Bei bestimmten Messanwendungen, z. B. in Getrieben, ist die Länge und die Bewegungsbahn des Bedämpfungselements ungenau vorgegeben und wird erst durch die Montage der induktiven Sensorik in eine endgültige Ortsbeziehung zum Getriebe gebracht. In diesem Fall kann sowohl der Abstand x als auch die Verkippung β; des Bedämpfungselements variieren. Auch kann die Arbeitstemperatur des Getriebes schwanken.

Unter diesen Umständen ist es ein erster Vorteil der Erfindung, dass die Länge des Bedämpfungselements nicht an die Spulenlänge angepasst sein muss. Die Spulenanordnung nach der Erfindung wird generell so betrieben, dass eine Kante des Bedämpfungselements nicht in Funktion tritt. Das Bedämpfungselement ist vielmehr durch nur eine Kante im Messbereich und durch den anschließenden Wirbelstrombereich flächenmäßig exakt definiert.

Der zweite Vorteil der Erfindung beruht darauf, dass der Überlappungsbereich des Spulenpaars den Messbereich M definiert und daher im Messbereich die Spulenüberdeckung sehr genau gemessen wird. Maßgeblich für die Erfindung ist ein Überhang außerhalb des Messbereichs, wobei es jedoch bereits genügt, wenn etwa 15% der Spulenlänge L außerhalb des Messbereichs M der exakten Linearität liegen.

Der dritte und entscheidende Vorteil der Erfindung besteht darin, dass bei der so definierten Spulenanordnung alle relevanten Störgrößen einem Gesetz des virtuellen Drehpunkts gehorchen. Außerhalb des Messbereichs gibt es einen Punkt der Kennlinienschar, der weitgehend unabhängig ist vom Abstand x, der Verkippung β; und/oder der Betriebstemperatur T. Aus diesem Grund muss zum Zweck einer genauen Messung nicht bekannt sein, welche Störgröße konkret am Werk ist. Falls sowohl Abstandsänderungen als auch Temperaturänderungen mitspielen, so wird bevorzugt, die Messanordnung auf den abstandsunabhängigen virtuellen Drehpunkt zu eichen und die Temperaturkompensation gegebenenfalls mit Hilfe einer zusätzlichen Referenzspule vorzunehmen.

Ausführungsbeispiele der Erfindung werden anhand der Fig. 1 bis 8 erläutert. Es zeigt
- Fig. 1: eine Aufsicht auf zwei Spulen A und B, die sich im Messbereich überlappen, und auf ein Bedämpfungselement (wobei die Spulen A und B entweder nebeneinander angeordnet sind und das Bedämpfungselement entsprechend breit ist oder die Spulen A und B untereinander angeordnet sind und das Bedämpfungselement entsprechend schmal ist) sowie ein Diagramm der zugehörigen Kennlinien jeweils für einen nominalen Abstand x₀ des Bedämpfungselements von dem Spulenpaar A, B und für einen gestörten Abstand x₁ des Bedämpfungselements von den Spulen A, B;
- Fig. 2: zur Verdeutlichung der linearen Anordnung zwei Ausschnitte aus Fig. 1, einen für die Überlappung der nebeneinander liegenden Linearspulen A, B und einen für die Überlappung der untereinander liegenden Linearspulen A, B;
- Fig. 3: beispielhaft eine Verkippung β des Bedämpfungselements von Fig. 1 und Fig. 2 in Messrichtung;
- Fig. 4: eine gebogene Anordnung von Rechteckspulen A, B und eines Bedämpfungselements zwecks Winkelmessung im Vergleich zu den linearen Anordnungen von Fig. 2;
- Fig. 5: die gebogene Anordnung von Fig. 4 mit den zugehörigen Kennlinienscharen;
- Fig. 6: zwei Messspulen A und B, zwei zugehörige Kennlinien und ein Bedämpfungselement ähnlich wie in Fig. 1, jedoch die Rechteckspulen an den Enden trapezförmig aufgeweitet zwecks weiterer Linearisierung des Messbereichs;
- Fig. 7: zwei Messspulen A mit B und Kennlinien und Bedämpfungselement wie in Fig. 1 und Fig. 6, jedoch das Spulenpaar A, B an einem Ende trapezförmig und am anderen Ende hakenförmig aufgeweitet zwecks weiterer Linearisierung der Kennlinien; und
- Fig. 8: eine Anordnung mehrerer Spulen mit Hintereinanderschaltung mehrerer überlappender Messbereiche zur Verlängerung des linearen Messbereichs.

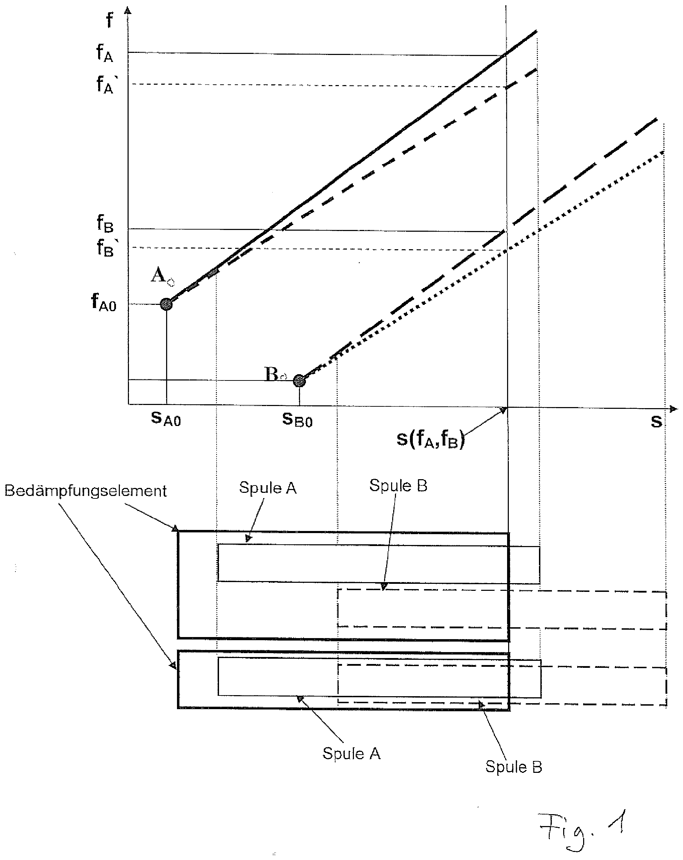

Die Fig. 1 zeigt unten zwei äquivalente Anordnungen von linearen Flachspulen A, B.

Die Spulen A, B sind in diesen beiden Ausführungsbeispielen als rechteckförmige Flachspulen ausgeführt. Wesentlich für die Erfindung ist, dass sich die Spulen A, B in Messrichtung überlappen. Die Messrichtung ist dadurch definiert, dass das ebenfalls rechteckförmige Bedämpfungselement in Richtung der Positionsachse s relativ zu dem Spulenpaar A, B verschiebbar ist.

Die Länge L der Spulen A, B ist in der Regel gleich groß und die Spulen überlappen sich beispielsweise zu 85 % ihrer Länge L. Dieser Überlappungsbereich von 0,85 L wird als Messbereich M definiert. Die restliche Spulenlänge von beispielsweise 15 % der Länge L bildet einen Überhang, der für die Funktion des Spulenpaars A, B ebenfalls wesentlich ist.

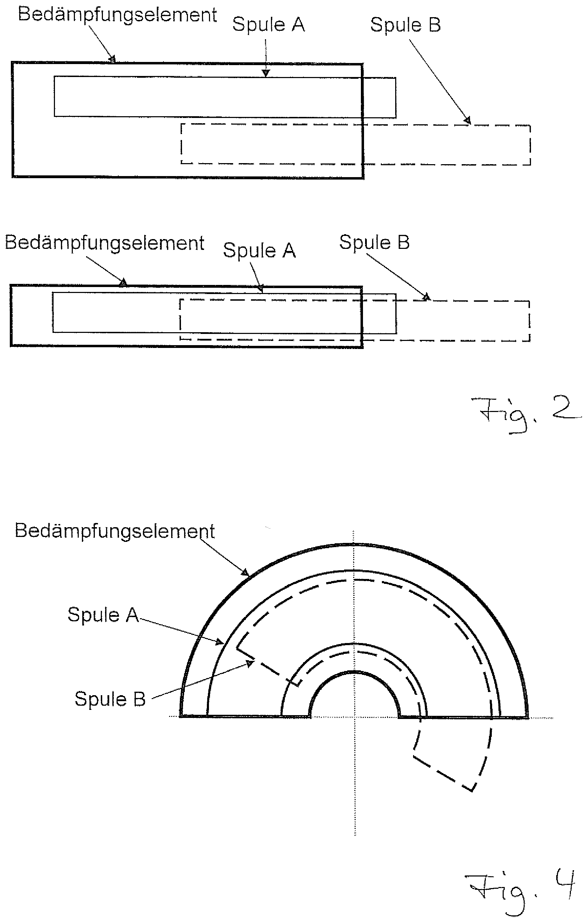

Die Überlappung kann, wie in Fig. 1 dargestellt und in Fig. 2 herausgehoben, realisiert werden entweder durch nebeneinander liegende Spulen A, B mit einem relativ breiten, beide Spulenbahnen überdeckenden Bedämpfungselement; oder mit einem untereinander liegenden, auf die Ober- und Unterseite des Spulenträgers verteilten Spulenpaar und mit einem entsprechend schmäleren Bedämpfungselement.

Beide Formen der Überlappung führen zu dem in Fig. 1 oben dargestellten Kennlinienfeld. Dargestellt ist als Funktion der Position s des Bedämpfungselements die Resonanzfrequenz f beider Spulen A, B eines Oszillators, von dem die jeweilige Spule einen Teil bildet. Man erkennt in Fig. 1, dass für die geschilderten rechteckförmigen Spulenanordnungen der Zusammenhang zwischen der Resonanzfrequenz f_{A} (s) und f_{B} (s) und der Position s des Bedämpfungselements jeweils linear ist. Da die Spule B um einen bestimmten Betrag, beispielsweise um 15 % der Spulenlänge L gegenüber der Spule A in Messrichtung verschoben ist, ist auch die zu B gehörende gestrichelte Kennlinie im Vergleich zu der zu A gehörenden durchgehenden Kennlinie entsprechend nach rechts verschoben. Im Messbereich M liegen die zu A gehörenden Resonanzfrequenzen f_{A} entsprechend höher als die zu B gehörenden Resonanzfrequenzen f_{B}, weil die Spule A am Messort mehr überdeckt ist als die Spule B.

Die Erfindung hat erkannt, dass die Kennlinien f_{A} (s) und f_{B} (s) besondere Eigenschaften haben. Sie sind nicht nur exakt linear im Messbereich M, sondern die Kennlinienscharen haben auch eine spezielle Form der Störung. Dies wird in Fig. 1 anhand der Abstandsabhängigkeit erläutert. Es ist bekannt, dass die Kennlinie f (s) empfindlich auf Änderungen des Abstands x zwischen dem Bedämpfungselement und der Spule reagiert. Es ist aber bisher nicht erkannt worden, dass die Kennlinienschar einen virtuellen Drehpunkt außerhalb des Messbereichs M besitzt. Die zuvor beschriebenen Kennlinien f_{A} (s) und f_{B} (s) gelten für einen nominalen Abstand x₀ zwischen dem Bedämpfungselement und den Spulen A, B. Verändert sich durch eine Störung des Messvorgangs der Abstand von x₀ zu x₁, so verändern sich die Kennlinien wie in Fig. 1 dargestellt zu f_{A}'(s) und f_{B}'(s). Die Kennlinienschar der Spule A besitzt demnach einen Drehpunkt A0 mit Koordinaten sA0 und fA0, die unabhängig von der Abstandsänderung gleich bleiben. Für den Drehpunkt B0 des Kennlinienfeldes der Spule B gilt Entsprechendes.

Diese Eigenschaft der beiden Kennlinienscharen, die nur verschoben sind, erlaubt eine besonders günstige Signalauswertung, die das Messergebnis s im Messbereich M unabhängig von jeglicher Störung des Abstands x macht.

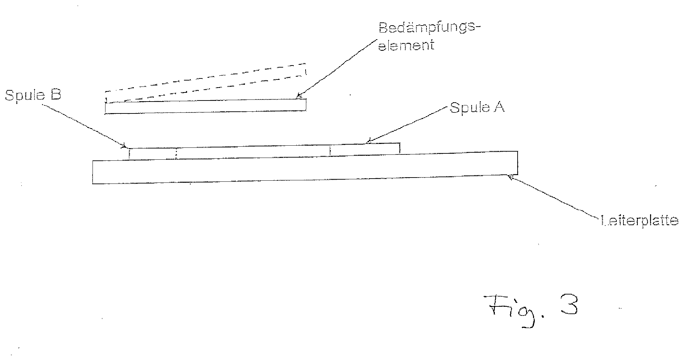

Die Eigenschaft des virtuellen Drehpunkts gilt nach den Erkenntnissen der Erfindung nicht nur für die Abstandsabhängigkeit, sondern auch für Störungen, die durch eine Verkippung β des Bedämpfungselements in Messrichtung ausgelöst werden. Eine derartige Verkippung β ist in Fig. 3 schematisch dargestellt. Es können sowohl Messfehler herausgerechnet werden, die durch ein Schieben des geneigten Bedämpfungselements in Messrichtung als auch durch ein Aufsteigen des geneigten Bedämpfungselements in Messrichtung hervorgerufen werden.

Neben den Störungen durch Abstands- und Verkippungsvariationen sind die Resonanzfrequenzen f auch temperaturabhängig. Aber auch solche Störungen durch wechselnde Temperaturen folgen der in Fig. 1 dargestellten Gesetzmäßigkeit. Falls mehrere Störeffekte zusammen kommen, so wird es bevorzugt, die Signale der Rechteckspulen A, B primär zur Elimination der Abstandsabhängigkeit zu eichen, während dann eine zusätzliche Referenzspule in bekannter Weise zur Elimination der Temperaturabhängigkeit vorgesehen sein kann.

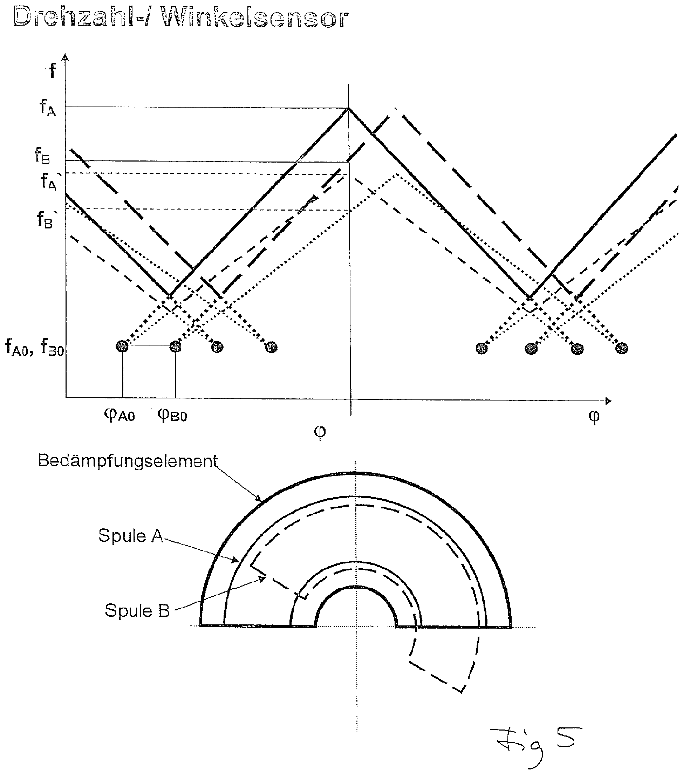

Alle bisher durchgeführten Überlegungen gelten in einem weiteren Ausführungsbeispiel auch für eine bogenförmige Anordnung, wie sie in Fig. 4 im Vergleich zu der Linearanordnung in Fig. 2 unten dargestellt ist. Mit dieser bogenförmigen Anordnung können Winkel α in gleicher Weise gemessen werden wie zuvor für die Positionen s beschrieben. In Fig. 5 sind die zugehörigen Kennlinienfelder dargestellt. Die Anordnung nach Fig. 4 und 5 eignet sich wegen der feinen Auflösung der linearen Kennlinie hauptsächlich als Winkelsensor, kann jedoch bei gröberer Auflösung auch zur Drehzahlerkennung genutzt werden.

Der Messbereich M umfasst in Fig. 4 knapp 180°, weil sich die beiden Halbkreisspulen in einem Bereich von knapp 180° überlappen. Das Bedämpfungselement umfasst ebenfalls einen Halbkreis von 180°. Es könnte, wenn es um einen Messbereich kleiner als 180° ginge, auch länger sein; aus dem nachfolgend dargelegten Grund ist das halbkreisförmig ausgebildete Bedämpfungselement jedoch besonders vorteilhaft.

Bei dem Winkelsensor nach Fig. 4 und 5 gilt ebenfalls das Prinzip der Erfindung, demzufolge stets nur eine Kante des Bedämpfungselements an der partiellen Überdeckung der Spulen beteiligt ist. Jede der beiden Spulenflächen wird zunehmend überdeckt bis zu einem Wert von beispielsweise 85 % der Spulenlänge, der für den Überlappungsbereich der Linearität maßgeblich ist. Ferner sind die restlichen 15 % im Überhangbereich jeder Spule überdeckbar. An dieser Definition der überdeckten Spulenflächen ist die andere Kante des länglichen Bedämpfungselements im Prinzip nicht beteiligt.

Ein spiegelbildlicher Messvorgang kann jedoch dann einsetzen, wenn gemäß Fig. 5 die vordere Kante über das gesamte Spulenpaar hinweg gelaufen ist und somit aus der Definition der überdeckten Spulenflächen ausscheidet. Dann ist entweder das Ende des Messbereiches erreicht (nämlich dann, wenn das Bedämpfungselement undefiniert länger ist als das Spulenpaar) oder es wird ein spiegelbildlicher Messbereich angeschlossen (gemäß Fig. 5 nämlich dann, wenn das Bedämpfungselement etwa so lang wie eine der Spulen ist). In dem Ausgangsbeispiel nach Fig. 4 und 5 ist durch diesen Effekt der Messbereich M von 180° auf 360° verdoppelt.

Der gleiche Effekt wie in Fig. 5 (Verdoppelung der Winkelmessung) könnte übrigens auch in Fig. 1 genutzt werden, um den geradlinigen Messbereich M zu verdoppeln, nämlich bei solchen linearen Positionsmessanwendungen, bei denen die Länge des Bedämpfungselements relativ zum Spulenpaar hinreichend definierbar wäre. Dann ließe sich auch in Fig. 1 der Messeffekt der Vorderkante spiegelbildlich wiederholen mit Hilfe der Hinterkante.

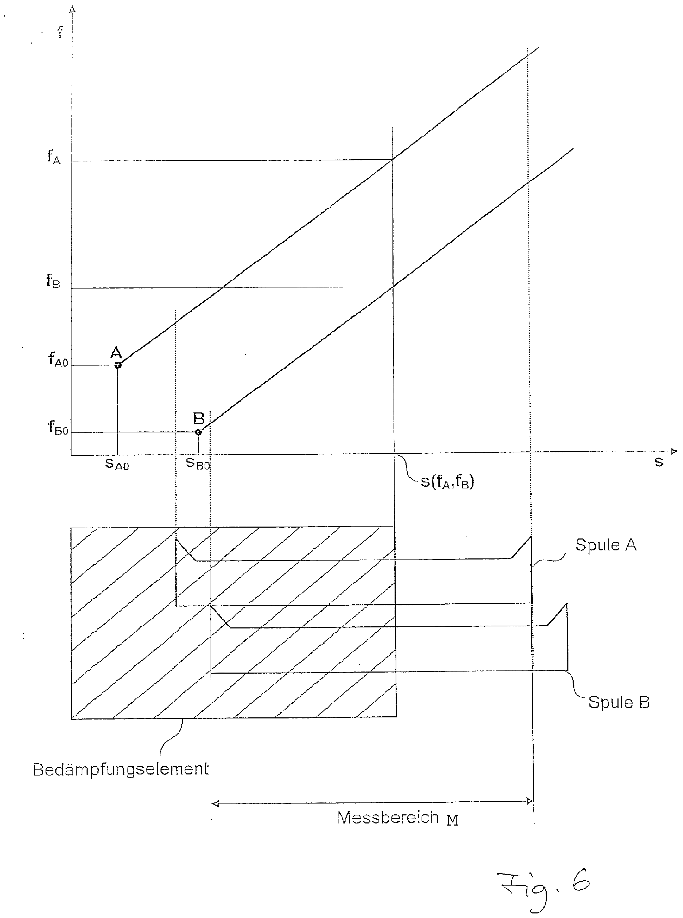

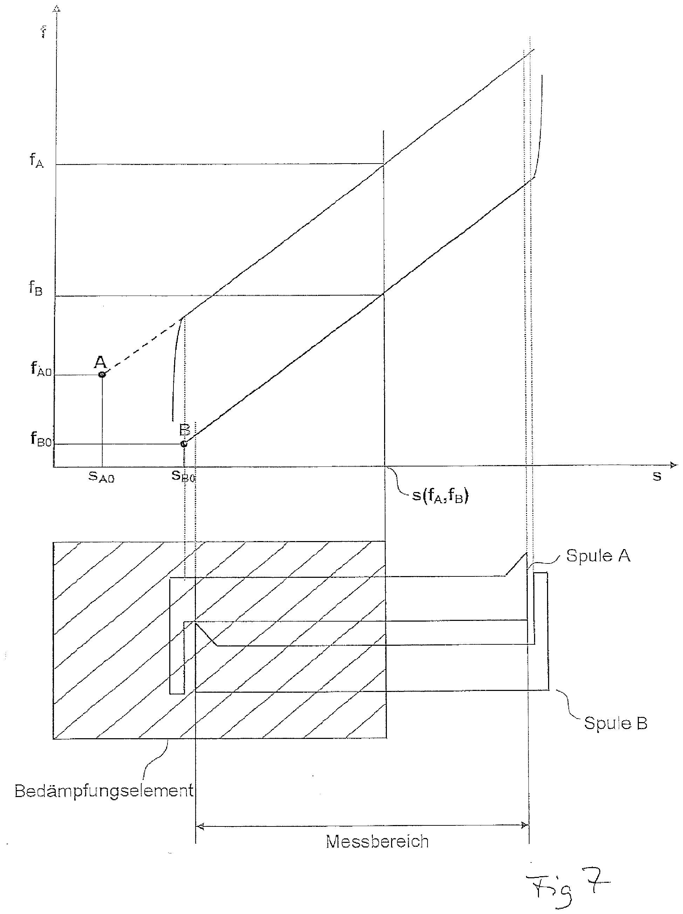

Fig. 6 und Fig. 7 zeigen Möglichkeiten, wie Randeffekte der rechteckförmigen Flachspulen ausgeschaltet werden können. Trapezförmige Erweiterungen der Spulenendbereiche gemäß Fig. 6 sind das bevorzugte Mittel, um die Kennlinie f(s) auch zum Rand des Messbereichs hin linear zu erhalten. Die trapezförmige Erweiterung kann in Messrichtung einseitig sein wie in Fig. 6 dargestellt, sie könnte auch trompetenartig auf beide Seiten der Messachse s verteilt sein.

Eine weitere Abwandlung ist in Fig. 7 dargestellt, wo ein Ende der Rechteckspule A hakenförmig ausgebildet ist und über das trapezförmige Ende der Spule B greift. Entsprechend ist das andere Ende der Spule A trapezförmig und das zugehörige Ende der Spule B hakenförmig ausgebildet. Diese Anordnung ist besonders linear und Platz sparend.

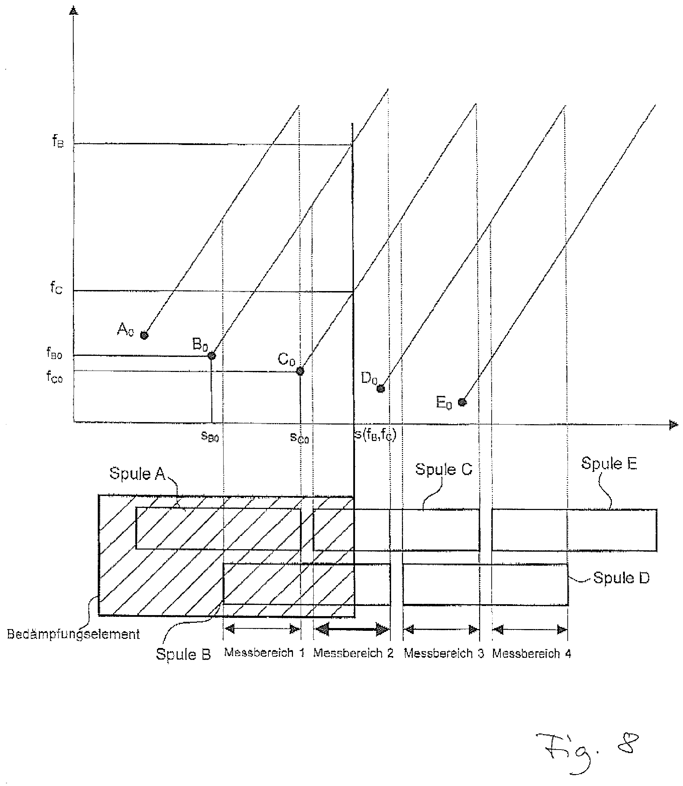

Schließlich ist in Fig. 8 eine Variation der linearen Anordnung nach Fig. 1 dargestellt, bei der nicht nur die Spule A mit der Spule B überlappt, sondern eine weitere Spule C mit der Spule B überlappt. Dadurch ergibt sich neben dem ursprünglichen Messbereich 1 ein weiterer Messbereich 2. Eine Überlappung der Spule C mit einer weiteren Spule D ergibt einen Messbereich 3, eine Überlappung der Spule D mit einer weiteren Spule E einen Messbereich 4 und so weiter. Auf diese Art ist durch eine Hintereinanderschaltung von Spulenpaaren gemäß Fig. 1 eine Erweiterung des Messbereichs realisierbar. Die Überlappung kann in diesem Fall aber nicht mehr als 50 % einer Spulenlänge L betragen.

In Fig. 8 oben sind die zugehörigen fünf Kennlinien (mit den fünf virtuellen Drehpunkten außerhalb des jeweiligen Messbereichs) dargestellt.

## Patentansprüche

1. Anordnung eines Spulenpaars (A, B) in einem örtlichen Messbereich (M) mit einem Messoszillator und einem Wirbelstrom-Bedämpfungselement in einem nominalen Abstand von dem Spulenpaar,
a) wobei die Spulen sich als Rechteckspulen (A, B) innerhalb des Messbereichs (M) in Messrichtung überlappen, wobei der Überlappungsbereich den Messbereich (M) bildet,
b) wobei die Spulen (A, B) einen Überhang der Spulenlänge (L) an jeweils einem Ende des Messbereichs (M) aufweisen,
c) wobei das Wirbelstrom-Bedämpfungselement mit zwei quer zur Messrichtung definierten Kanten relativ zum Spulenpaar (A, B) in Messrichtung verschiebbar ist, und das Wirbelstrom-Bedämpfungselement zumindest teilweise beide Spulen des Spulenpaars (A, B) überdeckt, wobei stets nur eine Kante des Wirbelstrom-Bedämpfungselements an der partiellen Überdeckung beteiligt ist.
d) und die Spulen (A, B) mit einem Messoszillator jeweils eine lineare Kennlinie der Oszillatorfrequenz (f) als Funktion des Orts (s, Φ) des Wirbelstrom-Bedämpfungselements aufweisen, und
e) diese linearen Kennlinien jeweils einen von Störungen, d. h. von Streuungen des nominalen Abstands, von Verkippungen des Wirbelstrom-Bedämpfungselements in Messrichtung und von Temperaturänderungen, weitgehend unabhängigen, virtuellen, d. h. außerhalb des Messbereichs (M) liegenden Drehpunkt (A0, B0) im Kennlinienfeld aufweisen.

2. Spulenanordnung nach Anspruch 1, **dadurch gekennzeichnet, dass**
die Rechteckspule (A, B) zwecks Messung einer Position (s) gerade bzw. ungebogen sind.

3. Spulenanordnung nach Anspruch 1, **dadurch gekennzeichnet, dass**
die Rechteckspulen (A, B) zwecks Messung eines Winkels (α) oder einer Drehzahl gebogen sind.

4. Spulenanordnung nach Anspruch 3, **dadurch gekennzeichnet, dass**
die gebogenen Rechteckspulen (A, B) zwecks Messung eines Halbkreises sich in einem Messbereich (M) von annähernd 180 Grad überlappen.

5. Spulenanordnung nach Anspruch 4, **dadurch gekennzeichnet, dass**
zur Messung eines ersten Halbkreises eine zunehmende Überdeckung des Messbereichs (M) durch das Bedämpfungselement und zur Messung eines zweiten Halbkreises eine abnehmende Überdeckung des Messbereichs (M) durch das Bedämpfungselement herangezogen werden, so dass ein Vollkreis (M= 360 Grad) messbar ist.

6. Spulenanordnung nach Anspruch 1 bis 5, **dadurch gekennzeichnet,**
**dass** die Rechteckspulen (A, B) zwecks Erweiterung des linearen Messbereichs (M) an mindestens einem Ende trapezförmig aufgeweitet sind.

7. Spulenanordnung nach Anspruch 6, **dadurch gekennzeichnet, dass**
die Rechteckspulen (A, B) nur einseitig trapezförmig, in Messrichtung gesehen, aufgeweitet sind.

8. Spulenanordnung nach Anspruch 6 oder 7, **dadurch gekennzeichnet,**
**dass** die Rechteckspulen (A, B) jeweils an einem Ende trapezförmig und am anderen Ende hakenförmig aufgeweitet sind.

9. Spulenanordnung nach einem der bisherigen Ansprüche 1 bis 8,
**dadurch gekennzeichnet, dass** die den Messbereich (M) definierende Überlappung dadurch erfolgt, dass die Rechteckspulen (A, B) in einer Messebene, beispielsweise auf einem Spulenträger nebeneinander, angeordnet sind und dass das Bedämpfungselement entsprechend breit ist.

10. Spulenanordnung nach Anspruch 1 bis 8, **dadurch gekennzeichnet,**
**dass** die den Messbereich (M) definierende Überlappung dadurch erfolgt, dass die Rechteckspulen (A, B) beidseitig eines Spulenträgers gegenüberliegend angeordnet sind, um Verkippungen des Bedämpfungselements quer zur Messrichtung entgegenzuwirken.

11. Spulenanordnung nach einem der Ansprüche 1 bis 10, **dadurch gekennzeichnet, dass** die Rechteckspulen (A, B) zur Elimination einer Abstandsabhängigkeit, beispielsweise senkrecht zur Messrichtung, geeicht sind und dass eine zusätzliche Referenzspule zur Elimination einer Temperaturabhängigkeit vorgesehen ist.

12. Spulenanordnung nach einem der bisherigen Ansprüche, **dadurch gekennzeichnet, dass** der Messbereich (M) auf mehrere Messbereiche (1, 2, 3, 4) verteilt ist, indem mehrere hintereinander liegende Spulen (A, B, C, D, E) mehrere Überlappungsbereiche definieren und eine Kante des Bedämpfungselements den aktuellen Messbereich (beispielsweise 2) des wirksamen Spulenpaars (beispielsweise B, C) bestimmt.

13. Spulenanordnung nach Anspruch 12, **dadurch gekennzeichnet, dass** die Signale (Oszillatorfrequenzen f) des jeweils wirksamen Spulenpaars (beispielsweise B, C) paarweise ausgewertet werden.

## Claims

1. Arrangement of a pair of coils (A, B) in a local measurement area (M), with a measuring oscillator and an eddy-current damping element at a nominal distance from the pair of coils,
a) wherein the coils, as rectangular coils (A, B), overlap within the measurement area (M) in the measuring direction, wherein the overlapping area forms the measurement area (M),
b) wherein the coils (A, B) have an overhang of the coil length (L), at in each case one end of the measurement area (M),
c) wherein the eddy-current damping element is displaceable with two edges defined transversely to the measuring direction in relation to the pair of coils (A, B) in the measuring direction, and the eddy current damping element at least partially covers both coils of the pair of coils (A, B), wherein only one edge of the eddy current damping element is ever involved in the partial coverage,
d) and the coils (A, B) with a measuring oscillator have in each case a linear characteristic of the oscillator frequency (f) as a function of the location (s, Φ) of the eddy current damping element, and
e) these linear characteristics have in each case within the family of characteristics a virtual, i.e. outside the measurement area (M), point of rotation (A0, B0) that is largely independent of interferences, i.e. variations of the nominal distance, of tiltings of the eddy-current damping element in the measuring direction and of temperature changes.

2. Coil arrangement according to Claim 1, **characterized in that**, for the purpose of measuring a position (s), the rectangular coils (A, B) are straight or unbent.

3. Coil arrangement according to Claim 1, **characterized in that**, for the purpose of measuring an angle (a) or a rotational speed, the rectangular coils (A, B) are bent.

4. Coil arrangement according to Claim 3, **characterized in that**, for the purpose of measuring a half circle, the bent rectangular coils (A, B) overlap in a measurement area (M) of approximately 180 degrees.

5. Coil arrangement according to Claim 4, **characterized in that**, for measuring a first half circle, an increasing coverage of the measurement area (M) is used by the damping element and, for measuring a second half circle, a decreasing coverage of the measurement area (M) is used by the damping element, so that a full circle (M=360 degrees) is measurable.

6. Coil arrangement according to Claims 1 to 5, **characterized in that**, for the purpose of extending the linear measurement area (M), the rectangular coils (A, B) are extended trapezoidally at at least one end.

7. Coil arrangement according to Claim 6, **characterized in that** the rectangular coils (A, B) are only extended trapezoidally on one side, seen in the measuring direction.

8. Coil arrangement according to Claim 6 or 7, **characterized in that** the rectangular coils (A, B) are in each case extended at one end as a trapezoidal shape and at the other end as a hook shape.

9. Coil arrangement according to one of the preceding Claims 1 to 8, **characterized in that** the overlapping defining the measurement area (M) takes place by the rectangular coils (A, B) being arranged in a measuring plane, for example next to one another on a coil carrier, and by the damping element being correspondingly wide.

10. Coil arrangement according to Claims 1 to 8, **characterized in that** the overlapping defining the measurement area (M) takes place by the rectangular coils (A, B) being arranged opposite one another on both sides of a coil carrier, in order to counteract tiltings of the damping element transversely to the measuring direction.

11. Coil arrangement according to one of Claims 1 to 10, **characterized in that** the rectangular coils (A, B) are calibrated to eliminate a distance dependence, for example perpendicularly to the measuring direction, and **in that** an additional reference coil is provided to eliminate a temperature dependence.

12. Coil arrangement according to one of the preceding claims, **characterized in that** the measurement area (M) is distributed over a number of measurement areas (1, 2, 3, 4), **in that** a number of coils (A, B, C, D, E) lying one behind the other define a number of overlapping areas and an edge of the damping element determines the current measurement area (for example 2) of the active pair of coils (for example B, C).

13. Coil arrangement according to Claim 12, **characterized in that** the signals (oscillator frequencies f) of the respectively active pair of coils (for example B, C) are evaluated in pairs.

## Revendications

1. Arrangement d'une paire de bobines (A, B) dans une zone de mesure (M) locale comprenant un oscillateur de mesure et un élément d'amortissement du courant de Foucault à un écart nominal de la paire de bobines,
a) les bobines se chevauchant sous la forme de bobines rectangulaires (A, B) à l'intérieur de la zone de mesure (M) dans la direction de mesure, la zone de chevauchement formant la zone de mesure (M),
b) les bobines (A, B) possédant un surplomb de la longueur de bobine (L) respectivement à une extrémité de la zone de mesure (M),
c) l'élément d'amortissement du courant de Foucault pouvant coulisser dans la direction de mesure par rapport à la paire de bobines (A, B) avec deux bords définis transversalement par rapport à la direction de mesure, et l'élément d'amortissement du courant de Foucault recouvrant au moins partiellement les deux bobines de la paire de bobines (A, B), avec toujours qu'un seul bord de l'élément d'amortissement du courant de Foucault qui participe au recouvrement partiel,
d) et les bobines (A, B) comprenant un oscillateur de mesure possédant respectivement une courbe caractéristique linéaire de la fréquence d'oscillateur (f) en fonction de l'endroit (s, Φ) de l'élément d'amortissement du courant de Foucault, et
e) ces courbes caractéristiques linéaires possédant respectivement un point de rotation (A0, B0) virtuel, c'est-à-dire se trouvant en-dehors de la zone de mesure (M), dans le diagramme caractéristique qui est en grande partie indépendant des perturbations, c'est-à-dire des dispersions de l'écart nominal, des défauts d'alignement angulaire de l'élément d'amortissement du courant de Foucault dans la direction de mesure et des variations de température.

2. Arrangement de bobines selon la revendication 1, **caractérisé en ce que** les bobines rectangulaires (A, B), à des fins de mesure d'une position (s), sont rectilignes ou non cintrées.

3. Arrangement de bobines selon la revendication 1, **caractérisé en ce que** les bobines rectangulaires (A, B), à des fins de mesure d'un angle (a) ou d'une vitesse de rotation, sont cintrées.

4. Arrangement de bobines selon la revendication 3, **caractérisé en ce que** les bobines rectangulaires (A, B) cintrées, à des fins de mesure d'un demi-cercle, se chevauchent dans une zone de mesure (M) d'approximativement 180 degrés.

5. Arrangement de bobines selon la revendication 4, **caractérisé en ce qu'**un recouvrement croissant de la zone de mesure (M) par l'élément d'amortissement est utilisé à des fins de mesure d'un premier demi-cercle et un recouvrement décroissant de la zone de mesure (M) par l'élément d'amortissement à des fins de mesure d'un deuxième demi-cercle, de sorte qu'il est possible de mesurer un cercle complet (M = 360 degrés).

6. Arrangement de bobines selon les revendications 1 à 5, **caractérisé en ce que** les bobines rectangulaires (A, B), en vue d'élargir la zone de mesure linéaire (M), sont élargies en forme de trapèze à au moins une extrémité.

7. Arrangement de bobines selon la revendication 6, **caractérisé en ce que** les bobines rectangulaires (A, B) ne sont élargies en forme de trapèze que d'un côté, vu dans la direction de mesure.

8. Arrangement de bobines selon la revendication 6 ou 7, **caractérisé en ce que** les bobines rectangulaires (A, B) sont respectivement élargies en forme de trapèze à une extrémité et en forme de crochet à l'autre extrémité.

9. Arrangement de bobines selon l'une des revendications précédentes 1 à 8, **caractérisé en ce que** le chevauchement qui définit la zone de mesure (M) est effectué **en ce que** les bobines rectangulaires (A, B) sont disposées dans un plan de mesure, par exemple l'une à côté de l'autre sur un porte-bobine, et **en ce que** l'élément d'amortissement est large en conséquence.

10. Arrangement de bobines selon l'une des revendications 1 à 8, **caractérisé en ce que** le chevauchement qui définit la zone de mesure (M) est effectué **en ce que** les bobines rectangulaires (A, B) sont disposées des deux côtés d'un porte-bobine en vis-à-vis l'une de l'autre afin de contrer un défaut d'alignement angulaire de l'élément d'amortissement transversalement par rapport à la direction de mesure.

11. Arrangement de bobines selon l'une des revendications 1 à 10, **caractérisé en ce que** les bobines rectangulaires (A, B) sont étalonnées en vue d'éliminer une dépendance à l'écart, par exemple perpendiculairement à la direction de mesure, et **en ce qu'**une bobine de référence supplémentaire est présente pour l'élimination d'une dépendance à la température.

12. Arrangement de bobines selon l'une des revendications précédentes, **caractérisé en ce que** la zone de mesure (M) est distribuée sur plusieurs zones de mesure (1, 2, 3, 4) **en ce que** plusieurs bobines (A, B, C, D, E) qui se trouvent les unes derrière les autres définissent plusieurs zones de chevauchement et un bord de l'élément d'amortissement détermine la zone de mesure actuelle (par exemple 2) de la paire de bobines active (par exemple B, C).

13. Arrangement de bobines selon la revendication 12, **caractérisé en ce que** les signaux (fréquences d'oscillateur f) de la paire de bobines respectivement active (par exemple B, C) sont interprétés par paires.
